# EUROPÄISCHE PATENTSCHRIFT

(11) **EP 3 024 137 B1**
(45) Veröffentlichungstag und Bekanntmachung des Hinweises auf die Patenterteilung: **17.05.2017**
(21) Anmeldenummer: 14193654.2
(22) Anmeldetag: 18.11.2014
(51) Int. Cl.: H02P 25/06, H02P 21/05, B23Q 1/00

(54) **Linearantrieb mit steuerungsübergreifender Schwingungsdämpfung**
Linear actuator with vibration damping in all control units
Entraînement linéaire doté d'un amortissement des vibrations adapté à la commande

(43) Veröffentlichungstag der Anmeldung: 25.05.2016
(73) Patentinhaber: Siemens Aktiengesellschaft, 80333 München (DE)
(72) Erfinder: Bönke, Daniel, 90459 Nürnberg (DE); Jäntsch, Michael, 91052 Erlangen (DE); Spindler, Carsten, 07368 Remptendorf (DE); Künzel, Stefan, 91056 Erlangen (DE)

(56) Entgegenhaltungen:
- WO-A1-2012/056844
- DE-A1- 19 519 238
- DE-C1- 10 150 319
- US-A1- 2009 021 194
- US-A1- 2014 247 003

## Beschreibung

Die vorliegende Erfindung geht aus von einem Steuerverfahren für ein Primärteil eines Linearantriebs,
- wobei das Primärteil eine Mehrzahl von sequenziell aufeinanderfolgenden Segmenten aufweist,
- wobei die Segmente jeweils mittels eines jeweiligen Umrichters an eine Versorgungsspannung angeschaltet werden, so dass die Segmente mit jeweiligen Strömen eines Drehstromsystems beaufschlagt werden,
- wobei einer den jeweiligen Umrichter steuernden jeweiligen Steuereinrichtung ein jeweiliger Geschwindigkeitssollwert vorgegeben wird,
- wobei die jeweilige Steuereinrichtung einen jeweiligen Basiskommutierungswinkel anhand des jeweiligen Geschwindigkeitssollwerts fortschreibt,
- wobei die jeweiligen Ströme erfasst und der jeweiligen Steuereinrichtung zugeführt werden,
- wobei die jeweilige Steuereinrichtung anhand der jeweiligen Ströme und eines jeweiligen Kommutierungswinkels einen jeweiligen Längsstrom und einen jeweiligen Querstrom ermittelt,
- wobei der jeweilige Längsstrom und der jeweilige Querstrom auf ein Sekundärteil des Linearantriebs bezogen sind,
- wobei die jeweilige Steuereinrichtung einen jeweiligen Querstromsollwert und den jeweiligen Querstrom einem jeweiligen Querstromregler zuführt, der daraus eine jeweilige Querspannung ermittelt,
- wobei die jeweilige Steuereinrichtung einen jeweiligen Längsstromsollwert und den jeweiligen Längsstrom einem jeweiligen Längsstromregler zuführt, der daraus einen jeweiligen Längsspannungssollwert ermittelt,
- wobei die jeweilige Steuereinrichtung anhand des jeweiligen Längsspannungssollwerts, des jeweiligen Querspannungssollwerts und des jeweiligen Kommutierungswinkels für vom jeweiligen Umrichter an das jeweilige Segment auszugebende Spannungen eines Drehspannungssystems charakteristische Daten ermittelt und dem jeweiligen Umrichter vorgibt.

Die vorliegende Erfindung geht weiterhin aus von einem Computerprogramm, das Maschinencode umfasst, der von einer Steuereinrichtung für einen Umrichter abarbeitbar ist, wobei die Abarbeitung des Maschinencodes durch die Steuereinrichtung bewirkt, dass die Steuereinrichtung den Umrichter gemäß einem Steuerverfahren der eingangs genannten Art steuert.

Die vorliegende Erfindung geht weiterhin aus von einer Steuereinrichtung für einen Umrichter.

Die vorliegende Erfindung geht weiterhin aus von einem Linearantrieb,
- wobei ein Primärteil des Linearantriebs eine Mehrzahl von sequenziell aufeinanderfolgenden Segmenten aufweist,
- wobei die Segmente jeweils mittels eines jeweiligen Umrichters an eine Versorgungsspannung angeschaltet werden, so dass die Segmente mit jeweiligen Strömen eines Drehstromsystems beaufschlagt werden,
- wobei die Umrichter von einer jeweiligen Steuereinrichtung gesteuert werden.

Steuerverfahren für Linearantriebe sind in verschiedenen Ausgestaltungen bekannt (siehe z.B. WO 2012/056844 A1). So ist beispielsweise insbesondere ein sogenannter geregelter Betrieb bekannt. Im geregelten Betrieb werden die Segmente des Primärteils mit einem Querstrom beaufschlagt, der exakt so groß ist, dass er eine Bewegung eines Trägers im jeweiligen Segment des Primärteils bewirkt. Der Träger weist eine Anzahl von Sekundärteilen auf, die innerhalb des jeweiligen Trägers ortsfest angeordnet sind. Der geregelte Betrieb wird beispielsweise bei der DE 101 50 318 A1 und der DE 101 50 319 C1 vorausgesetzt. Auch in der DE 10 2008 008 602 A1 wird der geregelte Betrieb vorausgesetzt. In dieser Schrift ist insbesondere erläutert, wie ein Träger auf einfache Weise von Segment zu Segment des Primärteils übergeben werden kann.

Ein wichtiger Aspekt des geregelten Betriebs besteht darin, dass sich in jedem Segment des Primärteils jeweils nur ein einziger Träger befinden darf. Es ist also im geregelten Betrieb nicht möglich, innerhalb ein und desselben Segments des Primärteils mehrere Träger zu verfahren. Dies gilt auch während der Übergabe eines Trägers von einem Segment des Primärteils zum nachfolgenden Segment des Primärteils. In diesem Fall dürfen sich in beiden beteiligten Segmenten keine anderen Träger befinden.

Je nach Anwendung kann die Beschränkung, dass sich in einem Segment des Primärteils nur ein einziger Träger befinden darf, von erheblichem Nachteil sein. Beispielsweise bei Anwendungen in der Verpackungsindustrie oder bei fertigungstechnischen Einrichtungen (beispielsweise Werkzeugmaschinen) könnte die Effizienz erheblich gesteigert werden, wenn es möglich wäre, sogenannte Züge zu verfahren, also eine Abfolge von dicht an dicht aufeinanderfolgenden Trägern.

Für Linearantriebe ist weiterhin ein sogenannter gesteuerter Betrieb bekannt. Im gesteuerten Betrieb werden die Segmente mit einem Längsstrom beaufschlagt, der hinreichend groß bemessen ist, um mit Sicherheit die Bewegung der im jeweiligen Segment befindlichen Träger zu bewirken. Der Querstrom wird möglichst gering gehalten oder durch Vorgabe eines entsprechenden Querstromsollwerts vorgesteuert. Durch Fortschalten des Längsstroms entsprechend der gewünschten Bewegung folgen die Träger - ähnlich der Bewegung des Rotors einer Synchronmaschine - dem durch den Längsstrom hervorgerufenen Magnetfeld. Aufgrund dieser Betriebsweise können pro Segment des Primärteils simultan mehrere Träger verfahren werden. Es können sich also im jeweiligen Segment des Primärteils gleichzeitig mehrere Träger befinden. Im gesteuerten Betrieb - in der Praxis oftmals auch als I/f-Betrieb bezeichnet - kann es jedoch zu mechanischen Schwingungen der Träger kommen, welche der gewünschten Bewegung der Träger überlagert sind. In vielen Fällen ist eine Dämpfung derartiger Schwingungen erforderlich. Möglichkeiten zur Dämpfung derartiger Schwingungen sind als solche bekannt. Rein beispielhaft wird auf die DE 195 19 238 A1 verwiesen. Mittels der bekannten Verfahren können jedoch Schwingungen, die beim Übergang eines Trägers von einem Segment zu einem anderen Segment auftreten, nur unzureichend gedämpft werden.

Die Aufgabe der vorliegenden Erfindung besteht darin, Möglichkeiten zu schaffen, mittels derer auf einfache Weise eine optimale Schwingungsdämpfung auch dann möglich ist, während ein Träger von einem Segment zum nächsten Segment übergeben wird.

Die Aufgabe wird durch ein Steuerverfahren mit den Merkmalen des Anspruchs 1 gelöst. Vorteilhafte Ausgestaltungen des Steuerverfahrens sind Gegenstand der abhängigen Ansprüche 2 bis 11.

Erfindungsgemäß wird ein Steuerverfahren der eingangs genannten Art dadurch ausgestaltet,
- dass die jeweilige Steuereinrichtung den jeweiligen Kommutierungswinkel als Summe des jeweiligen Basiskommutierungswinkels und eines jeweiligen Dämpfungskommutierungswinkels zuzüglich eines jeweiligen ersten Korrekturwerts und/oder eines jeweiligen zweiten Korrekturwerts ermittelt,
- dass die jeweilige Steuereinrichtung den jeweiligen Dämpfungskommutierungswinkel mittels eines jeweiligen Schwingungsdämpfungsblocks ermittelt, dem zumindest der jeweilige Längsspannungssollwert und/oder der jeweilige Querspannungssollwert zugeführt werden,
- dass die jeweilige Steuereinrichtung den jeweiligen ersten Korrekturwert von der das jeweils vorgeordnete Segment steuernden Steuereinrichtung und/oder den jeweiligen zweiten Korrekturwert von der das jeweils nachgeordnete Segment steuernden Steuereinrichtung entgegennimmt,
- dass die jeweilige Steuereinrichtung mittels des jeweiligen Schwingungsdämpfungsblocks eine erste und/oder eine zweite Korrekturgröße ermittelt und
- dass die jeweilige Steuereinrichtung die jeweilige erste Korrekturgröße an die das jeweils vorgeordnete Segment steuernde Steuereinrichtung und/oder die jeweilige zweite Korrekturgröße an die das jeweils nachgeordnete Segment steuernde Steuereinrichtung übermittelt.

Aufgrund der Berücksichtigung des jeweiligen Dämpfungskommutierungswinkels wird die mechanische Schwingung des Trägers gedämpft, soweit die Auswirkungen der mechanischen Schwingung innerhalb des jeweiligen Segments erfasst werden. Aufgrund der Berücksichtigung des jeweiligen ersten Korrekturwerts wird die mechanische Schwingung des Trägers gedämpft, soweit die Auswirkungen der mechanischen Schwingung innerhalb des jeweils vorgeordneten Segments erfasst werden. In analoger Weise wird aufgrund der Berücksichtigung des jeweiligen zweiten Korrekturwerts die mechanische Schwingung des Trägers gedämpft, soweit die Auswirkungen der mechanischen Schwingung innerhalb des jeweils vorgeordneten Segments erfasst werden. Hierbei ist es prinzipiell ausreichend, wenn alternativ der erste oder der zweite Korrekturwert berücksichtigt werden. Dies stellt auch den Regelfall dar. Es ist jedoch prinzipiell ebenso möglich, beide Korrekturwerte zu berücksichtigen.

In analoger Weise ermöglicht die Ermittlung der ersten und der zweiten Korrekturgröße durch die jeweilige Steuereinrichtung, dass der Steuereinrichtung für das jeweils vorgeordnete Segment und/oder der Steuereinrichtung für das jeweils nachgeordnete Segment die entsprechenden Korrekturgrößen zur Verfügung gestellt werden und dort als Korrekturwerte berücksichtigt werden können. Prinzipiell ist es wiederum ausreichend, wenn alternativ die erste oder die zweite Korrekturgröße ermittelt werden. Dies stellt auch den Regelfall dar. Es ist jedoch prinzipiell ebenso möglich, beide Korrekturgrößen zu ermitteln.

In einer bevorzugten Ausgestaltung der vorliegenden Erfindung wird dem jeweiligen Schwingungsdämpfungsblock zusätzlich der jeweilige Geschwindigkeitssollwert zugeführt. In diesem Fall berücksichtigt der jeweilige Schwingungsdämpfungsblock den jeweiligen Geschwindigkeitssollwert bei der Ermittlung des jeweiligen Dämpfungskommutierungswinkels sowie der jeweiligen ersten und/oder der jeweiligen zweiten Korrekturgröße. Diese Ausgestaltung führt zu einer optimierten Dämpfung der überlagerten mechanischen Schwingung der Träger.

Die jeweilige Steuereinrichtung nimmt die jeweiligen Ströme in einem Stromreglertakt entgegen und gibt die für die vom jeweiligen Umrichter an das jeweilige Segment auszugebenden Spannungen charakteristischen Daten dem jeweiligen Umrichter im Stromreglertakt vor. Weiterhin nimmt die jeweilige Steuereinrichtung die Korrekturwerte in einem Kommunikationstakt entgegen und übermittelt die Korrekturgrößen im Kommunikationstakt. Der Austausch der Korrekturwerte und der Korrekturgrößen zwischen den Steuereinrichtungen erfolgt also mit dem Kommunikationstakt. Je schneller der Kommunikationstakt ist, desto besser ist die Qualität der Regelung. Im optimalen Fall ist der Kommunikationstakt gleich dem Stromreglertakt. Alternativ kann der Kommunikationstakt ein ganzzahliges Vielfaches des Stromreglertakts sein.

Es ist möglich, dass die jeweilige Steuereinrichtung als Slave der das jeweils vorgeordnete oder das jeweils nachgeordnete Segment steuernden Steuereinrichtung agiert. In diesem Fall nimmt die jeweilige Steuereinrichtung - anstelle der Vorgabe des jeweiligen Geschwindigkeitssollwerts nebst Fortschreibung des Basiskommutierungswinkels - den Basiskommutierungswinkel von der das jeweils vorgeordnete Segment steuernden Steuereinrichtung oder von der das jeweils nachgeordnete Segment steuernden Steuereinrichtung entgegen.

Wenn in einem derartigen Fall der jeweilige Schwingungsdämpfungsblock den jeweiligen Geschwindigkeitssollwert bei der Ermittlung des jeweiligen Dämpfungskommutierungswinkels sowie der jeweiligen ersten und/oder der jeweiligen zweiten Korrekturgröße berücksichtigen soll, ist es erforderlich, dass die jeweilige Steuereinrichtung aus dem entgegengenommenen Basiskommutierungswinkel den jeweiligen Geschwindigkeitssollwert ableitet und dass dem jeweiligen Schwingungsdämpfungsblock zusätzlich der jeweilige abgeleitete Geschwindigkeitssollwert zugeführt wird.

Das Entgegennehmen des Basiskommutierungswinkels erfolgt vorzugsweise im Kommunikationstakt.

In einer weiteren bevorzugten Ausgestaltung wird dem jeweiligen Schwingungsdämpfungsblock zusätzlich der jeweilige Querstromsollwert zugeführt. In diesem Fall berücksichtigt der jeweilige Schwingungsdämpfungsblock den jeweiligen Querstromsollwert bei der Ermittlung des jeweiligen Dämpfungskommutierungswinkels sowie der jeweiligen ersten und/oder der jeweiligen zweiten Korrekturgröße. Es ist möglich, dass der jeweilige Querstromsollwert dem jeweiligen Schwingungsdämpfungsblock alternativ zum jeweiligen Geschwindigkeitssollwert zugeführt wird. Vorzugsweise wird der jeweilige Querstromsollwert dem jeweiligen Schwingungsdämpfungsblock jedoch zusätzlich zum jeweiligen Geschwindigkeitssollwert zugeführt.

Vorzugsweise berücksichtigt die jeweilige Steuereinrichtung das Ausmaß, in dem eine Kopplung der Segmente miteinander erfolgt, in korrektem Umfang. Hierzu sind zwei alternative Ausgestaltungen möglich.

Zum einen ist es möglich, dass die jeweilige Steuereinrichtung einen ersten Anteil ermittelt, zu welchem ein sich teilweise im jeweiligen Segment befindliches Sekundärteil des Linearantriebs sich im jeweils vorgeordneten Segment befindet, und den jeweiligen ersten Korrekturwert vor dem Summieren mit dem ersten Anteil wichtet und/oder dass die jeweilige Steuereinrichtung einen zweiten Anteil ermittelt, zu welchem ein sich teilweise im jeweiligen Segment befindliches Sekundärteil des Linearantriebs sich im jeweils nachgeordneten Segment befindet, und die jeweilige zweite Korrekturgröße vor dem Summieren mit dem zweiten Anteil wichtet.

Zum anderen ist es möglich, dass die jeweilige Steuereinrichtung einen ersten Anteil ermittelt, zu welchem ein sich teilweise im vorgeordneten Segment befindliches Sekundärteil des Linearantriebs sich im jeweiligen Segment befindet, und den ersten Anteil bei der Ermittlung der jeweiligen ersten Korrekturgröße berücksichtigt und/oder dass die jeweilige Steuereinrichtung einen zweiten Anteil ermittelt, zu welchem ein sich teilweise im nachgeordneten Segment befindliches Sekundärteil des Linearantriebs sich im jeweiligen Segment befindet, und den zweiten Anteil bei der Ermittlung der jeweiligen zweiten Korrekturgröße berücksichtigt.

Es ist möglich, dass der jeweiligen Steuereinrichtung zusätzlich ein jeweiliger Beschleunigungssollwert vorgegeben wird und die jeweilige Steuereinrichtung den jeweiligen Querstromsollwert anhand des jeweiligen Beschleunigungssollwerts ermittelt.

Das erfindungsgemäße Steuerverfahren ist prinzipiell bei beliebigen Anwendungen einsetzbar. Vorzugsweise wird es zum Transportieren und Positionieren von Werkstückträgern oder Förderelementen verwendet.

Die Aufgabe wird weiterhin durch ein Computerprogramm mit den Merkmalen des Anspruchs 12 gelöst. Erfindungsgemäß ist ein Computerprogramm der eingangs genannten Art derart ausgestaltet, dass die Abarbeitung des Maschinencodes durch die Steuereinrichtung bewirkt, dass die Steuereinrichtung den Umrichter gemäß einem erfindungsgemäßen Steuerverfahren steuert.

Die Aufgabe wird weiterhin durch eine Steuereinrichtung mit den Merkmalen des Anspruchs 13 gelöst. Erfindungsgemäß ist die Steuereinrichtung mit einem erfindungsgemäßen Computerprogramm programmiert ist.

Die Aufgabe wird weiterhin durch einen Linearantrieb mit den Merkmalen des Anspruchs 14 gelöst. Erfindungsgemäß sind die Steuereinrichtungen jeweils erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Linearantrieb,
- FIG 2: eine Steuereinrichtung eines Segments eines Primärteils eines Linearantriebs,
- FIG 3: eine Modifikation der Steuereinrichtung von FIG 2,
- FIG 4: eine Modifikation der Steuereinrichtung von FIG 3,
- FIG 5: eine Modifikation der Steuereinrichtung von FIG 2,
- FIG 6: einen Schwingungsdämpfungsblock,
- FIG 7: Teile einer Steuereinrichtung und
- FIG 8: Teile einer Steuereinrichtung.

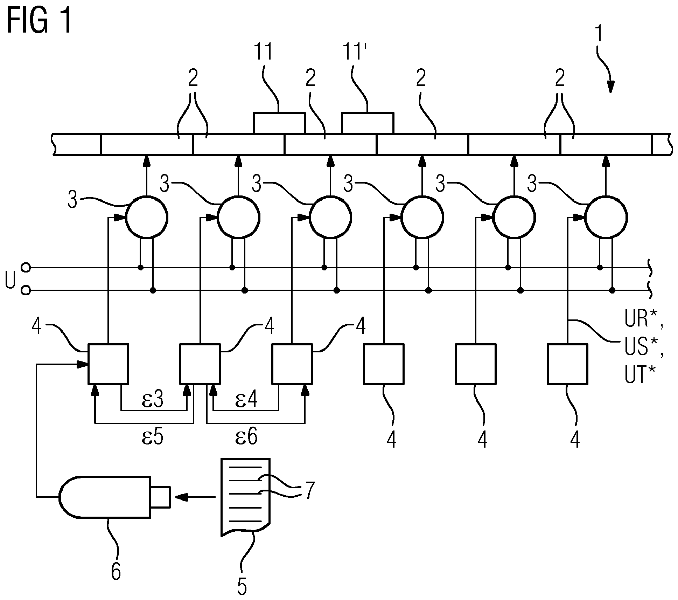

Gemäß FIG 1 weist ein Linearantrieb ein Primärteil 1 auf. Das Primärteil 1 weist eine Mehrzahl von Segmenten 2 auf. Die Segmente 2 folgen sequenziell aufeinander. Die Segmente 2 werden mittels eines jeweiligen Umrichters 3 an eine Versorgungsspannung U angeschaltet. Dadurch werden die Segmente 2 mit jeweiligen Strömen IR, IS, IT eines Drehstromsystems beaufschlagt.

Die Umrichter 3 werden von einer jeweiligen Steuereinrichtung 4 gesteuert. Die Umrichter 3 können zu Gruppen zusammengefasst sein, wobei jede Gruppe von einem einzigen Mikroprozessor gesteuert wird. Ein Beispiel eines derartigen Steuerungssystems ist das SINAMICS S120 der Siemens AG. Bei diesem System können bis zu sechs Umrichter 3 von ein und demselben Controller (= Steuereinrichtung im Sinne der vorliegenden Erfindung) gesteuert werden. Ob die Steuereinrichtungen 4 jeweils einen einzelnen Umrichter 3 steuern oder die Umrichter 3 zu Gruppen zusammengefasst sind, ist im Rahmen der vorliegenden Erfindung jedoch von untergeordneter Bedeutung. Entscheidend ist, dass im logischen Sinn jede Steuereinrichtung 4 individuell den jeweiligen Umrichter 3 ansteuert und mittels des jeweiligen Umrichters 3 das jeweilige Segment 2 individuell mit den jeweiligen Strömen IR, IS, IT beaufschlagt wird.

Die Steuereinrichtungen 4 sind mit einem Computerprogramm 5 programmiert. Rein beispielhaft ist dies in FIG 1 für eine der Steuereinrichtungen 4 dargestellt. Das Computerprogramm 5 kann den Steuereinrichtungen 4 beispielsweise über einen Datenträger 6 (rein beispielhaft ist in FIG 1 als Datenträger 6 ein USB-Memorystick dargestellt) zugeführt werden. Das Computerprogramm 5 umfasst Maschinencode 7, der von der jeweiligen Steuereinrichtung 4 abarbeitbar ist. Die Abarbeitung des Maschinencodes 7 durch die jeweilige Steuereinrichtung 4 bewirkt, dass die jeweilige Steuereinrichtung 4 den von ihr gesteuerten Umrichter 3 gemäß einem Steuerverfahren steuert, das nachstehend in Verbindung mit den weiteren FIG näher erläutert wird.

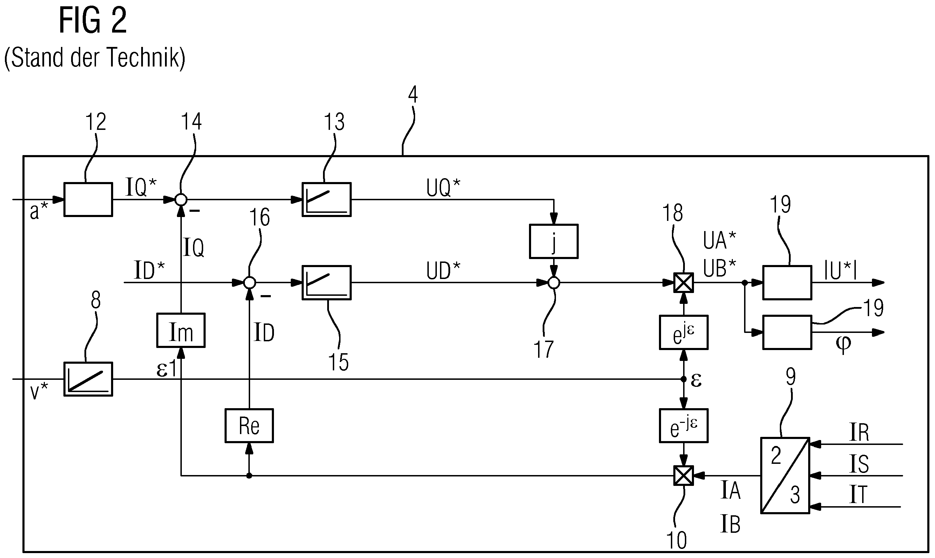

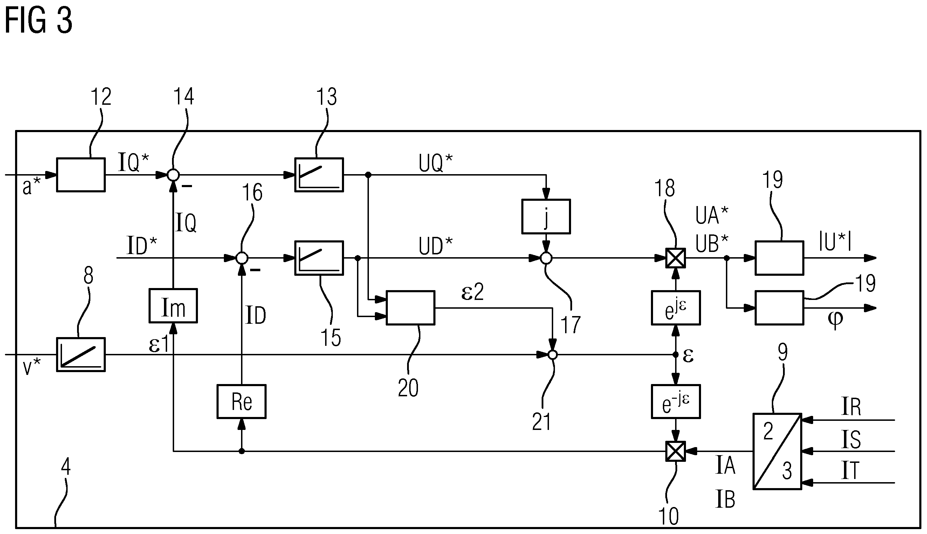

Nachfolgend wird in Verbindung mit den FIG 2 und 3 eine einzelne der Steuereinrichtungen 4 näher erläutert. Die entsprechenden Ausführungen gelten jedoch auch für die weiteren Steuereinrichtungen 4. Mit Ausnahme der Versorgungsspannung U, die für alle oder einen Teil der Umrichter 3 einheitlich sen sein kann, beziehen sich die nachstehenden Ausführungen jedoch stets individuell auf die einzelne betrachtete Steuereinrichtung 4. Anderen Steuereinrichtungen 4 werden also zwar gleichartige Eingangsgrößen zugeführt. Auch führen die anderen Steuereinrichtungen 4 gleichartige Maßnahmen durch und geben gleichartige Ausgangsgrößen aus. Die jeweiligen konkreten Werte sind jedoch individuell für die jeweilige Steuereinrichtung 4.

Gemäß FIG 2 wird der Steuereinrichtung 4 ein Geschwindigkeitssollwert v* vorgegeben. Die Vorgabe des Geschwindigkeitssollwerts v* erfolgt in der Regel mit einem Steuertakt. Der Steuertakt kann beispielsweise im Bereich zwischen 500 µs und 16 ms liegen. Der Geschwindigkeitssollwert v* wird einem Integrator 8 zugeführt. Mittels des Integrators 8 schreibt die Steuereinrichtung 4 anhand des Geschwindigkeitssollwerts v* einen Basiskommutierungswinkel ε1 fort.

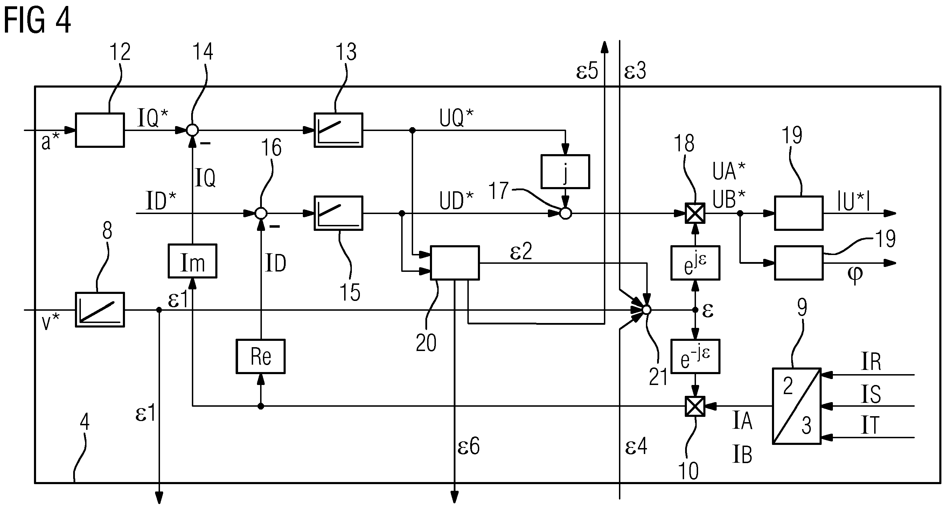

Der Basiskommutierungswinkel ε1 korrespondiert im Rahmen der Ausgestaltung von FIG 2 zugleich auch mit einem Kommutierungswinkel ε. Im Vorgriff auf die späteren Ausführungen zu den FIG 3 und 4 wird dennoch nachfolgend zwischen dem Basiskommutierungswinkel ε1 und dem Kommutierungswinkel ε unterschieden.

Mittels entsprechender Sensoren werden weiterhin für den von der Steuereinrichtung 4 gesteuerten Umrichter 3 die Ströme IR, IS, IT des Drehstromsystems erfasst und der Steuereinrichtung 4 zugeführt. Die Steuereinrichtung 4 nimmt die Ströme IR, IS, IT in einem Stromreglertakt entgegen. Der Stromreglertakt ist erheblich kleiner als der Steuertakt. Der Stromreglertakt kann beispielsweise im Bereich zwischen 31,25 µs und 250 µs liegen, insbesondere bei 62,5 µs oder 125 µs. Die erfassten Ströme IR, IS und IT werden einem Ermittlungsblock 9 zugeführt. Mittels des Ermittlungsblocks 9 erfolgt eine Umrechnung in orthogonale Stromkomponenten IA, IB. Die Stromkomponenten IA, IB sind auf das jeweilige Segment 2 bzw. den jeweiligen Umrichter 3 bezogen. Die Umrechnung ist Fachleuten allgemein bekannt und geläufig.

Die Steuereinrichtung 4 ermittelt anhand der orthogonalen Stromkomponenten IA, IB und des Kommutierungswinkels ε einen Längsstrom ID und einen Querstrom IQ. Zu diesem Zweck werden die orthogonalen Stromkomponenten IA, IB zu einer komplexen Größe (Stromraumzeiger) zusammengefasst und in dieser Form einem Multiplizierer 10 zugeführt. Die Stromkomponente IA korrespondiert mit dem Realteil der komplexen Größe, die Stromkomponente IB mit dem Imaginärteil der komplexen Größe. Dem Multiplizierer 10 wird weiterhin die komplexe Größe e^{-jε} zugeführt. Der Multiplizierer 10 führt die (komplexe) Multiplikation durch. Das Ergebnis der komplexen Multiplikation ist eine weitere komplexe Größe, deren Real- und Imaginärteil mit dem Längsstrom ID und dem Querstrom IQ korrespondieren. Die beiden Ströme ID, IQ sind somit ebenfalls orthogonal zueinander. Sie sind jedoch auf ein Sekundärteil 11 (siehe FIG 1) des Linearantriebs bezogen. Auch diese Umrechnung ist Fachleuten bekannt und geläufig.

Im gesteuerten Betrieb korrespondieren die ermittelten Ströme ID, IQ genau genommen nicht notwendigerweise tatsächlich mit den realen, auf das Sekundärteil 11 bezogenen Strömen. Denn für eine exakte Berechnung müsste die Lage des Sekundärteils 11 relativ zum Segment 2 bekannt sein. Dies ist jedoch nicht der Fall. In der Praxis führt die erläuterte Vorgehensweise jedoch zu einem ordnungsgemäßen Betrieb des Linearantriebs.

Das Sekundärteil 11 wirkt mit dem Segment 2 zusammen. Insbesondere ist das Sekundärteil 11 relativ zum Segment 2 bewegbar.

Die Steuereinrichtung 4 führt einen Querstromsollwert IQ* und den Querstrom IQ einem Querstromregler 13 zu. Insbesondere kann zunächst in einem Knotenpunkt 14 die Differenz von Querstromsollwert IQ* und Querstrom IQ gebildet werden und dem Querstromregler 13 diese Differenz zugeführt werden. Der Querstromregler 13 ermittelt aus dem Querstromsollwert IQ* und dem Querstrom IQ einen Querspannungssollwert UQ*. Es ist möglich, dass der Querstromsollwert IQ* der Steuereinrichtung 4 vorab bekannt ist, beispielsweise konstant den Wert Null aufweist. Alternativ kann der Querstromsollwert IQ* der Steuereinrichtung 4 von außen vorgegeben werden oder von der Steuereinrichtung 4 aus dem Geschwindigkeitssollwert v* abgeleitet werden. Wiederum alternativ ist es möglich, dass der Steuereinrichtung 4 - zusätzlich zum Geschwindigkeitssollwert v* - ein Beschleunigungssollwert a* vorgegeben wird. In diesem Fall ermittelt die Steuereinrichtung 4 den Querstromsollwert IQ* in einem weiteren Ermittlungsblock 12 in an sich bekannter Weise anhand des Beschleunigungssollwerts a*. Die Vorgabe des Beschleunigungssollwerts a* erfolgt gegebenenfalls im Steuertakt.

In analoger Weise führt die Steuereinrichtung 4 einem Längsstromregler 15 einen Längsstromsollwert ID* und den Längsstrom ID zu. Insbesondere kann zunächst in einem Knotenpunkt 16 die Differenz von Längsstromsollwert ID* und Längsstrom ID gebildet werden und dem Längsstromregler 15 diese Differenz zugeführt werden. Der Längsstromregler 15 ermittelt aus dem Längsstromsollwert ID* und dem Längsstrom ID einen Längsspannungssollwert UD*. Der Längsstromsollwert ID* kann nach Bedarf festgelegt sein.

Der Querstromregler 13 kann nach Bedarf ausgebildet sein, beispielsweise als PI-Regler. In analoger Weise kann auch der Längsstromregler 15 nach Bedarf ausgebildet sein, beispielsweise als PI-Regler. In der Regel sind der Querstromregler 13 und der Längsstromregler 15 gleichartig ausgebildet und auf gleiche Weise parametriert.

Die Steuereinrichtung 4 ermittelt anhand des Längsspannungssollwerts UD*, des Querspannungssollwerts UQ* und des Kommutierungswinkels ε Daten, die für Spannungen UR*, US*, UT* eines Drehspannungssystems charakteristisch sind. Die Spannungen UR*, US*, UT* sind diejenigen Spannungen, die vom Umrichter 3 an das Segment 2 ausgegeben werden sollen.

Zur Ermittlung der charakteristischen Daten werden der Längsspannungssollwert UD* und der Querspannungssollwert UQ* einem weiteren Knotenpunkt 17 zugeführt. Vor dem Zuführen zum Knotenpunkt 17 wird der Querspannungssollwert UQ* mit der imaginären Einheit j multipliziert. Das Ausgangssignal des Knotenpunkts 17 ist somit eine komplexe Größe, deren Realteil mit dem Längsspannungssollwert UD* und deren Imaginärteil mit dem Querspannungssollwert UQ* korrespondiert (Spannungsraumzeiger). Die im Knotenpunkt 17 ermittelte komplexe Größe wird einem Multiplizierer 18 zugeführt. Dem Multiplizierer 18 wird weiterhin die komplexe Größe e^{jε} zugeführt. Der Multiplizierer 18 führt die (komplexe) Multiplikation durch. Das Ergebnis der komplexen Multiplikation ist eine weitere komplexe Größe, deren Real- und Imaginärteil mit orthogonalen Spannungskomponenten UA*, UB* korrespondieren. Sie sind jedoch nicht mehr auf das Sekundärteil 11, sondern auf das Segment 2 bezogen. Auch diese Umrechnung ist Fachleuten allgemein bekannt und geläufig.

Bereits die Spannungskomponenten UA*, UB* sind charakteristisch für die Spannungen UR*, US*, UT*, die vom Umrichter 3 an das Segment 2 ausgegeben werden müssen. Es ist daher möglich, dass die Steuereinrichtung 4 dem Umrichter 3 die Spannungskomponenten UA*, UB* vorgibt.

Es ist jedoch ebenso eine Vorgabe anderer charakteristischer Daten möglich. Insbesondere kann die Steuereinrichtung 4 mittels eines Ermittlungsblocks 19 eine Umrechnung der Spannungskomponenten UA*, UB* in Betrag und Phasenlage ϕ der auszugebenden Spannung U* vornehmen. Auch diese Daten sind charakteristisch für die vom Umrichter 3 an das Segment 2 ausgegebenen Spannungen UR*, US*, UT*. Auch ist es möglich, dass die Steuereinrichtung 4 direkt die Spannungen UR*, US*, UT* selbst ermittelt und dem Umrichter 3 vorgibt. Auch diese beiden Umrechnungen sind Fachleuten allgemein bekannt und geläufig.

Die charakteristischen Daten - also entweder die Spannungskomponenten UA*, UB* oder der Betrag und die Phasenlage ϕ der Spannung U* oder die Spannungen UR*, US*, UT* selbst - werden dem Umrichter 3 von der Steuereinrichtung 4 vorgegeben. Die Vorgabe der charakteristischen Daten an den Umrichter 3 erfolgt im Stromreglertakt.

Die obenstehend in Verbindung mit FIG 2 erläuterte Vorgehensweise ist als solche Fachleuten allgemein bekannt. Im geregelten Betrieb wird der Querstromsollwert IQ* exakt derart bestimmt, dass das Sekundärteil 11 bewegt wird. Der Querstromsollwert IQ* wird derart vorgegeben, dass eine gewünschte Beschleunigung - also der Beschleunigungssollwert a* - erreicht wird. Im gesteuerten Betrieb wird in der Regel der Beschleunigungssollwert a* auf den Wert 0 festgesetzt oder gemäß einer vordefinierten Funktion vorgesteuert. Für den Längsspannungssollwert ID* ist es in der Regel ausreichend, wenn er hinreichend groß vorgegeben wird und im Übrigen konstant gehalten wird. Die Vorgabe des Querstromsollwerts IQ* kann explizit erfolgen. Alternativ ist es möglich, dass der Querstromsollwert IQ* durch den Beschleunigungssollwert a* oder durch den Betriebsmodus "gesteuerter Betrieb" als solchen festgelegt ist.

FIG 3 zeigt vom Ansatz her dieselben Komponenten wie FIG 2. Zusätzlich sind jedoch ein Schwingungsdämpfungsblock 20 und ein Knotenpunkt 21 vorhanden. Dem Schwingungsdämpfungsblock 20 werden gemäß FIG 3 der Längsspannungssollwert UD* und/oder der Querspannungssollwert UQ* zugeführt. Mittels des Schwingungsdämpfungsblocks 20 ermittelt die Steuereinrichtung 4 einen Dämpfungskommutierungswinkel ε2. Die Ermittlung des Dämpfungskommutierungswinkels ε2 erfolgt derart, dass einer mechanischen Schwingung des Sekundärteils 11 entgegengewirkt wird, die der gewünschten Bewegung des Sekundärteils 11 überlagert ist. Die gewünschte Bewegung des Sekundärteils 12 ist durch den Geschwindigkeitssollwert v* definiert. Im Knotenpunkt 21 bildet die Steuereinrichtung 4 die Summe des Basiskommutierungswinkels ε1 und des Dämpfungskommutierungswinkels ε2. Das Ergebnis der Summation entspricht dem Kommutierungswinkel ε.

FIG 4 zeigt vom Ansatz her dieselben Komponenten wie FIG 3. Zusätzlich werden dem Knotenpunkt 21 jedoch ein erster Korrekturwert ε3 und/oder ein zweiter Korrekturwert ε4 zugeführt. Wie zuvor wird im Knotenpunkt 21 die Summe der dem Knotenpunkt 21 zugeführten Werte ε1 und ε2 sowie mindestens eines der Korrekturwerte ε3, ε4 gebildet. Das Ergebnis der Summation entspricht wie zuvor dem Kommutierungswinkel ε.

Den ersten Korrekturwert ε3 nimmt die Steuereinrichtung 4 - siehe für eine der Steuereinrichtungen 4 exemplarisch in FIG 1 eingezeichnet - von derjenigen Steuereinrichtung 4 entgegen, die das vorgeordnete Segment 2 steuert. Den zweiten Korrekturwert ε4 nimmt die Steuereinrichtung 4 - siehe für dieselbe Steuereinrichtung 4 ebenfalls exemplarisch in FIG 1 eingezeichnet - von derjenigen Steuereinrichtung 4 entgegen, die das nachgeordnete Segment 2 steuert. Diese beiden Steuereinrichtungen 4 werden nachfolgend als vorgeordnete und nachgeordnete Steuereinrichtung 4 bezeichnet. Es ist möglich, dass die Steuereinrichtung 4 gleichzeitig beide Korrekturwerte ε3, ε4 entgegennimmt. In vielen Fällen nimmt die Steuereinrichtung 4 jedoch nur einen der beiden Korrekturwerte ε3, ε4 entgegen.

Falls die Steuereinrichtung 4, welche den jeweiligen Korrekturwert ε3, ε4 zur Verfügung stellt, und die Steuereinrichtung 4, die den jeweiligen Korrekturwert ε3, ε4 entgegennimmt, im physikalischen Sinn dieselbe Steuereinrichtung 4 sind, ist keine physikalische Übermittlung erforderlich. Es ist lediglich ein entsprechender Zugriff auf den sowieso zur Verfügung stehenden jeweiligen Korrekturwert ε3, ε4 erforderlich. In diesem Fall kann ohne weiteres eine Verwertung des jeweiligen Korrekturwerts ε3, ε4 im Stromreglertakt erfolgen. Anderenfalls - falls also eine tatsächliche Übermittlung von einer Steuereinrichtung 4 an eine andere Steuereinrichtung 4 erforderlich ist - nimmt die jeweilige Steuereinrichtung 4 die Korrekturwerte ε3, ε4 in einem Kommunikationstakt entgegen. Im optimalen Fall ist der Kommunikationstakt mit dem Stromreglertakt identisch. Alternativ kann der Kommunikationstakt ein ganzzahliges Vielfaches des Stromreglertakts sein. Wenn - beispielsweise - der Stromreglertakt 62,5 µs beträgt, kann der Kommunikationstakt beispielsweise 62,5 µs, 125 µs, 250 µs oder 500 µs betragen. Vorzugsweise ist der Kommunikationstakt jedoch kleiner als der Steuertakt.

Die Steuereinrichtung 4 ermittelt mittels des Schwingungsdämpfungsblocks 20 weiterhin eine erste Korrekturgröße ε5.

Die erste Korrekturgröße ε5 übermittelt die Steuereinrichtung 4 an die vorgeordnete Steuereinrichtung 4. Alternativ oder zusätzlich ermittelt die Steuereinrichtung 4 mittels des Schwingungsdämpfungsblocks 20 eine zweite Korrekturgröße ε6. Die zweite Korrekturgröße ε6 übermittelt die Steuereinrichtung 4 an die nachgeordnete Steuereinrichtung 4. Es ist möglich, dass die Steuereinrichtung 4 gleichzeitig beide Korrekturgrößen ε5, ε6 ermittelt und übermittelt. In vielen Fällen ermittelt und übermittelt die Steuereinrichtung 4 jedoch nur eine der beiden Korrekturgrößen ε5, ε6. Die Übermittlung der Korrekturgrößen ε5, ε6 erfolgt im Kommunikationstakt. Sie werden von der Steuereinrichtung 4, an welche die jeweilige Korrekturgröße ε5, ε6 übermittelt wird, als erster bzw. zweiter Korrekturwert ε3, ε4 berücksichtigt.

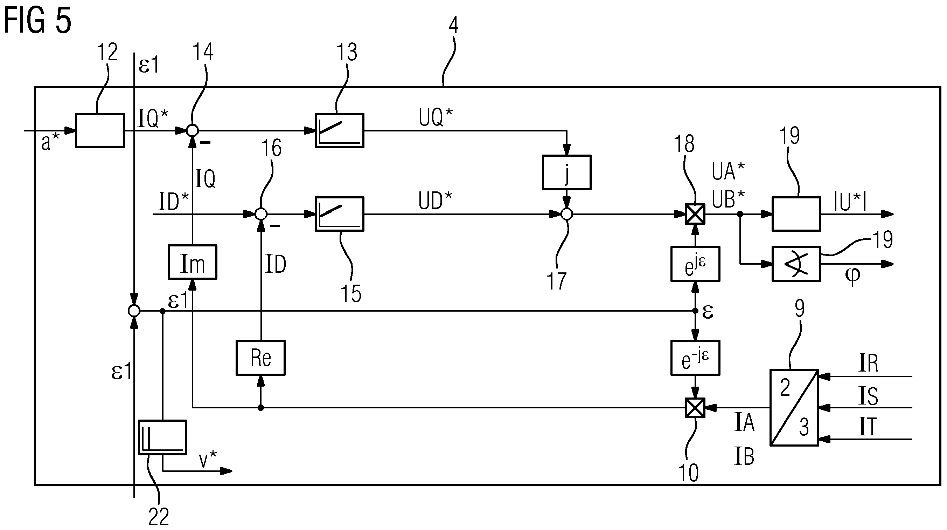

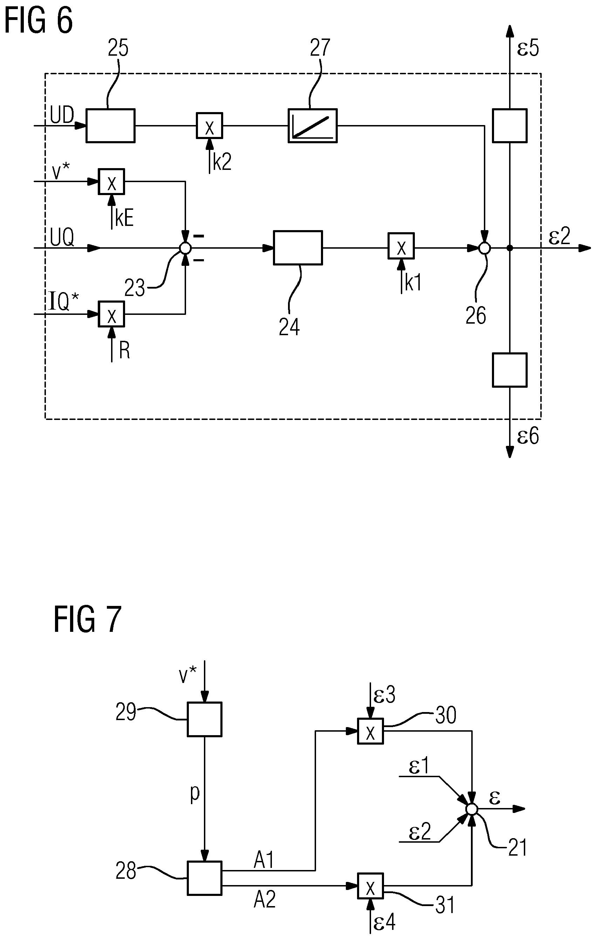

FIG 5 zeigt eine mögliche alternative Ausgestaltung der Steuereinrichtung 4 von FIG 2. Die Ausgestaltung ist in analoger Weise auch bei den Steuereinrichtungen 4 der FIG 3 und 4 realisierbar. Gemäß FIG 5 wird der Steuereinrichtung 4 nicht der Geschwindigkeitssollwert v* vorgegeben. Die Steuereinrichtung 4 ist demzufolge nicht in der Lage, den Basiskommutierungswinkel ε1 anhand des Geschwindigkeitssollwerts v* fortzuschreiben. Im Falle der Ausgestaltung von FIG 5 wird der Steuereinrichtung 4 jedoch der Basiskommutierungswinkel ε1 direkt vorgegeben, und zwar entweder von der vorgeordneten Steuereinrichtung 4 oder von der nachgeordneten Steuereinrichtung 4. Die Steuereinrichtung 4 nimmt den Basiskommutierungswinkel ε1 von der vorgeordneten oder der nachgeordneten Steuereinrichtung 4 entgegen. Die Übermittlung des Basiskommutierungswinkels ε1 erfolgt im Kommunikationstakt. Bei Bedarf - dies wird nachstehend in Verbindung mit FIG 6 ersichtlich werden - kann ein Differenzierer 22 vorhanden sein, mittels dessen die Steuereinrichtung 4 aus dem entgegengenommenen Basiskommutierungswinkel ε1 den Geschwindigkeitssollwert v* ableitet.

FIG 6 zeigt eine mögliche, derzeit bevorzugte Ausgestaltung des Schwingungsdämpfungsblocks 20. Gemäß FIG 6 wird dem Schwingungsdämpfungsblock 20 - zusätzlich zum Längsspannungssollwert UD* und zum Querspannungssollwert UQ* - der Geschwindigkeitssollwert v* zugeführt. Falls entsprechend der Ausgestaltung von FIG 5 der Steuereinrichtung 4 nicht der Geschwindigkeitssollwert v* vorgegeben wird, sondern direkt der Basiskommutierungswinkel ε1 zugeführt wird, handelt es sich um den mittels des Differenzierers 22 abgeleiteten Geschwindigkeitssollwert v*. Der Schwingungsdämpfungsblock 20 berücksichtigt im Falle der Ausgestaltung gemäß FIG 6 den Geschwindigkeitssollwert v* bei der Ermittlung des Dämpfungskommutierungswinkels ε2 sowie der ersten und/oder der zweiten Korrekturgröße ε5, ε6. Beispielsweise kann entsprechend der Darstellung in FIG 6 der Geschwindigkeitssollwert v* mit einer Kenngröße kE gewichtet werden und das Ergebnis der Wichtung in einem Knotenpunkt 23 von dem Querspannungssollwert UQ* subtrahiert werden. Die Kenngröße kE kann durch elektrische Kenngrößen des entsprechenden Segments 2 bestimmt sein.

Alternativ oder zusätzlich - vorzugsweise zusätzlich - ist es möglich, dass dem Schwingungsdämpfungsblock 20 der Querstromsollwert IQ* zugeführt wird. In diesem Fall berücksichtigt der Schwingungsdämpfungsblock 20 den Querstromsollwert IQ* bei der Ermittlung des Dämpfungskommutierungswinkels ε2 sowie der ersten und/oder der zweiten Korrekturgröße ε5, ε6. Beispielsweise kann entsprechend der Darstellung in FIG 6 der Querstromsollwert IQ* mit einer weiteren Kenngröße R gewichtet werden und das Ergebnis der Wichtung im Knotenpunkt 23 von dem Querspannungssollwert UQ* subtrahiert werden. Die weitere Kenngröße R kann beispielsweise durch den Wicklungswiderstand des entsprechenden Segments 2 bestimmt sein, insbesondere mit ihm übereinstimmen.

FIG 6 zeigt zugleich auch weitere bevorzugte Ausgestaltungen des Schwingungsdämpfungsblocks 20. Insbesondere umfasst der Schwingungsdämpfungsblock 20 gemäß FIG 6 ein erstes und ein zweites Filter 24, 25. Die Filter 24, 25 können beispielsweise Bandpässe sein. Dem ersten Filter 24 wird der Querspannungssollwert UQ* zugeführt. Der Querspannungssollwert UQ* kann entsprechend der Darstellung in FIG 6 insbesondere bereits zuvor im Knotenpunkt 23 um einen vom Geschwindigkeitssollwert v* und/oder einen vom Querstromsollwert IQ* abhängigen Anteil korrigiert sein. Das Ausgangssignal des ersten Filters 24 wird mit einem ersten Koeffizienten k1 multipliziert und sodann einem Knotenpunkt 26 zugeführt. Dem zweiten Filter 25 wird der Längsspannungssollwert UD* zugeführt. Das Ausgangssignal des zweiten Filters 25 wird mit einem zweiten Koeffizienten k2 multipliziert und sodann einem Integrator 27 zugeführt. Alternativ zur Multiplikation mit dem Koeffizienten k2 kann auch eine Multiplikation mit dem Wert k2/v* erfolgen. In diesem Fall wird also der Längsspannungssollwert UD* nicht nur mit dem zweiten Koeffizienten k2 gewichtet, sondern zusätzlich auch durch den Geschwindigkeitssollwert v* dividiert. Das Ausgangssignal des Integrators 27 wird dem Knotenpunkt 26 zugeführt. Im Knotenpunkt 26 wird die Summe der dem Knotenpunkt 26 zugeführten Größen gebildet. Das Ausgangssignal des Knotenpunkts 26 entspricht dem Dämpfungskommutierungswinkel ε2.

FIG 7 zeigt eine weitere bevorzugte Ausgestaltung der erfindungsgemäßen Steuereinrichtung 4. Diese Ausgestaltung ist nach Bedarf mit der Ausgestaltung gemäß FIG 4 und/oder FIG 6 kombinierbar, auch in zusätzlicher Kombination mit FIG 5.

Gemäß FIG 7 weist die Steuereinrichtung 4 einen Ermittlungsblock 28 auf. Dem Ermittlungsblock 28 wird ein Positionssignal p zugeführt. Das Positionssignal p kann von der Steuereinrichtung 4 beispielsweise in einem weiteren Ermittlungsblock 29 aus dem Geschwindigkeitssollwert v* ermittelt werden. Alternativ kann das Positionssignal p der Steuereinrichtung 4 beispielsweise von einer übergeordneten, in FIG 7 nicht dargestellten Steuereinrichtung vorgegeben werden.

Anhand des Positionssignals p kann die Steuereinrichtung 4 im Ermittlungsblock 28 einen ersten Anteil A1 ermitteln, zu dem das Sekundärteil 11, wenn es sich teilweise in dem von der Steuereinrichtung 4 gesteuerten Segment 2 befindet, sich zugleich auch im vorgeordneten Segment 2 befindet. Der erste Anteil A1 weist also den Wert 1 auf, wenn sich das entsprechende Sekundärteil 11 noch vollständig im vorgeordneten Segment 2 befindet, sich aber gerade an der Grenze zum von der Steuereinrichtung 4 gesteuerten Segment 2 befindet. Mit der Fortbewegung des Sekundärteils 11 nimmt der erste Anteil A1 immer niedrigere Werte an. Der erste Anteil A1 nimmt den Wert 0 an, wenn sich das entsprechende Sekundärteil 11 gerade vollständig im von der Steuereinrichtung 4 gesteuerten Segment 2 befindet, aber gerade an der Grenze zum vorgeordneten Segment 2. Den ermittelten ersten Anteil A1 führt die Steuereinrichtung 4 einem Multiplizierer 30 zu. Im Multiplizierer 30 wird der erste Korrekturwert ε3 mit dem ersten Anteil A1 multipliziert bzw. gewichtet. Das Ergebnis der Multiplikation wird dem Knotenpunkt 21 zugeführt.

In analoger Weise kann die Steuereinrichtung 4 anhand des Positionssignals p im Ermittlungsblock 28 einen zweiten Anteil A2 ermitteln, zu dem ein weiteres Sekundärteil 11' (siehe FIG 1), wenn es sich teilweise in dem von der Steuereinrichtung 4 gesteuerten Segment 2 befindet, sich zugleich auch im nachgeordneten Segment 2 befindet. Der zweite Anteil A2 weist also den Wert 0 auf, wenn sich das entsprechende Sekundärteil 11' noch vollständig in dem von der Steuereinrichtung 4 gesteuerten Segment 2 befindet, sich aber gerade an der Grenze zum nachgeordneten Segment 2 befindet. Mit der Fortbewegung des Sekundärteils 11' nimmt der zweite Anteil A2 immer höhere Werte an. Der zweite Anteil A2 nimmt den Wert 1 an, wenn sich das entsprechende Sekundärteil 11' gerade vollständig im nachgeordneten Segment 2 befindet, aber gerade an der Grenze zum von der Steuereinrichtung 4 gesteuerten Segment 2. Den ermittelten zweiten Anteil A2 führt die Steuereinrichtung 4 einem Multiplizierer 31 zu. Im Multiplizierer 31 wird der zweite Korrekturwert ε4 mit dem zweiten Anteil A2 multipliziert bzw. gewichtet. Das Ergebnis der Multiplikation wird dem Knotenpunkt 21 zugeführt.

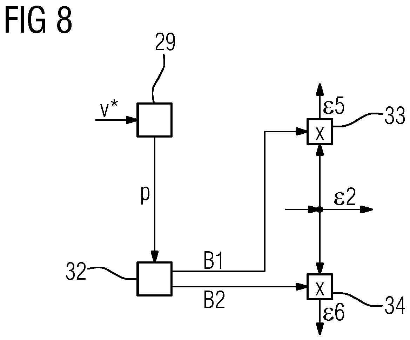

FIG 8 zeigt eine zu der Ausgestaltung von FIG 7 alternative Ausgestaltung der erfindungsgemäßen Steuereinrichtung. Auch diese Ausgestaltung ist nach Bedarf mit den FIG 4 und/oder FIG 6 - gegebenenfalls einschließlich FIG 5 - kombinierbar.

Im Falle der Ausgestaltung von FIG 8 ist der Ermittlungsblock 28 durch einen Ermittlungsblock 32 ersetzt. Dem Ermittlungsblock 32 wird - analog zur Ausgestaltung gemäß FIG 7 - das Positionssignal p zugeführt. Das Positionssignal p kann analog zu FIG 7 von der Steuereinrichtung 4 ermittelt werden oder der Steuereinrichtung 4 vorgegeben werden.

Mittels des Ermittlungsblocks 32 ermittelt die Steuereinrichtung 4 einen ersten Anteil B1, zu welchem das Sekundärteil 11, sofern es sich teilweise im vorgeordneten Segment 2 befindet, sich zugleich auch im von der Steuereinrichtung 4 gesteuerten Segment 2 befindet. Der erste Anteil B1 weist also den Wert 0 auf, wenn sich das entsprechende Sekundärteil 11 noch vollständig im vorgeordneten Segment 2 befindet, sich aber gerade an der Grenze zum von der Steuereinrichtung 4 gesteuerten Segment 2 befindet. Mit der Fortbewegung des Sekundärteils 11 nimmt der erste Anteil B1 immer größere Werte an. Der erste Anteil B1 nimmt den Wert 1 an, wenn sich das entsprechende Sekundärteil 11 gerade vollständig im von der Steuereinrichtung 4 gesteuerten Segment 2 befindet, aber gerade an der Grenze zum vorgeordneten Segment 2. Den ermittelten ersten Anteil B1 führt die Steuereinrichtung 4 einem Multiplizierer 33 zu. Im Multiplizierer 33 wird die erste Korrekturgröße ε5 mit dem ersten Anteil B1 multipliziert bzw. gewichtet. Das Ergebnis der Multiplikation wird an die vorgeordnete Steuereinrichtung 4 ausgegeben.

In analoger Weise kann die Steuereinrichtung 4 anhand des Positionssignals p im Ermittlungsblock 32 einen zweiten Anteil B2 ermitteln, zu dem ein weiteres Sekundärteil 11', wenn es sich teilweise in dem nachgeordneten Segment 2 befindet, sich zugleich auch im von der Steuereinrichtung 4 gesteuerten Segment 2 befindet. Der zweite Anteil B2 weist also den Wert 1 auf, wenn sich das entsprechende Sekundärteil 11' noch vollständig in dem von der Steuereinrichtung 4 gesteuerten Segment 2 befindet, sich aber gerade an der Grenze zum nachgeordneten Segment 2 befindet. Mit der Fortbewegung des Sekundärteils 11' nimmt der zweite Anteil B2 immer kleinere Werte an. Der zweite Anteil B2 nimmt den Wert 0 an, wenn sich das entsprechende Sekundärteil 11' gerade vollständig im nachgeordneten Segment 2 befindet, aber gerade an der Grenze zum von der Steuereinrichtung 4 gesteuerten Segment 2. Den ermittelten zweiten Anteil B2 führt die Steuereinrichtung 4 einem Multiplizierer 34 zu. Im Multiplizierer 34 wird die zweite Korrekturgröße ε6 mit dem zweiten Anteil B2 multipliziert bzw. gewichtet. Das Ergebnis der Multiplikation wird auf dem an die nachgeordnete Steuereinrichtung 4 ausgegeben.

Der Linearantrieb kann nach Bedarf eingesetzt werden. Insbesondere kann der Linearantrieb zum Transportieren und Positionieren von Werkstückträgern oder Förderelementen verwendet werden.

Zusammengefasst betrifft die vorliegende Erfindung somit folgenden Sachverhalt:
Segmente 2 eines Primärteils 1 eines Linearantriebs werden mittels Umrichtern 3 an eine Versorgungsspannung U angeschaltet und dadurch mit Strömen IR, IS, IT eines Drehstromsystems beaufschlagt. Steuereinrichtungen 4 der Umrichter 3 schreiben anhand eines Geschwindigkeitssollwerts v* einen Basiskommutierungswinkel ε1 fort. Sie ermitteln anhand der Ströme IR, IS, IT und eines Kommutierungswinkels ε einen Längsstrom ID und einen Querstrom IQ, die auf ein Sekundärteil 11, 11' des Linearantriebs bezogen sind. Die Steuereinrichtungen 4 führen einen Querstromsollwert IQ* und den Querstrom IQ einem Querstromregler 13 zu, der daraus einen Querspannungssollwert UQ* ermittelt. Ferner führen sie einen Längsstromsollwert ID* und den Längsstrom ID einem Längsstromregler 15 zu, der daraus einen Längsspannungssollwert UD* ermittelt. Sie ermitteln anhand des Längsspannungssollwerts UD*, des Querspannungssollwerts UQ* und des Kommutierungswinkels ε Daten, die für von den Umrichtern 3 an die Segmente 2 auszugebende Spannungen UR*, US*, UT* eines Drehspannungssystems charakteristisch sind. Der Kommutierungswinkel ε ist die Summe von Basiskommutierungswinkel ε1 und Dämpfungskommutierungswinkel ε2 zuzüglich eines ersten und/oder eines zweiten Korrekturwerts ε3, ε4. Der Dämpfungskommutierungswinkel ε2 wird unter Verwendung zumindest des Längsspannungssollwerts UD* und/oder des Querspannungssollwerts UQ* ermittelt. Den ersten/zweiten Korrekturwert ε3, ε4 erhält die Steuereinrichtung 4 von der vorgeordneten/nachgeordneten Steuereinrichtung 4. Die Steuereinrichtung 4 ermittelt eine erste/zweite Korrekturgröße ε5, ε6, die sie an die vorgeordnete/nachgeordnete Steuereinrichtung 4 übermittelt.

Die vorliegende Erfindung weist viele Vorteile auf. Insbesondere ist auf einfache Weise ein schwingungsfreier Betrieb des Linearantriebs auch dann realisierbar, wenn ganze Züge von Trägern bewegt werden sollen, wenn also zwangsweise ein gesteuerter Betrieb erfolgen muss. Die erfindungsgemäßen Vorgehensweisen können ohne weiteres in vorhandenen Steuereinrichtungen 4 durch entsprechende Anpassung der Betriebssoftware nachgerüstet werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden.

## Patentansprüche

1. Steuerverfahren für ein Primärteil (1) eines Linearantriebs,
- wobei das Primärteil (1) eine Mehrzahl von sequenziell aufeinanderfolgenden Segmenten (2) aufweist,
- wobei die Segmente (2) jeweils mittels eines jeweiligen Umrichters (3) an eine Versorgungsspannung (U) angeschaltet werden, so dass die Segmente (2) mit jeweiligen Strömen (IR, IS, IT) eines Drehstromsystems beaufschlagt werden,
- wobei einer den jeweiligen Umrichter (3) steuernden jeweiligen Steuereinrichtung (4) ein jeweiliger Geschwindigkeitssollwert (v*) vorgegeben wird,
- wobei die jeweilige Steuereinrichtung (4) einen jeweiligen Basiskommutierungswinkel (ε1) anhand des jeweiligen Geschwindigkeitssollwerts (v*) fortschreibt,
- wobei die jeweiligen Ströme (IR, IS, IT) erfasst und der jeweiligen Steuereinrichtung (4) zugeführt werden,
- wobei die jeweilige Steuereinrichtung (4) anhand der jeweiligen Ströme (IR, IS, IT) und eines jeweiligen Kommutierungswinkels (ε) einen jeweiligen Längsstrom (ID) und einen jeweiligen Querstrom (IQ) ermittelt,
- wobei der jeweilige Längsstrom (ID) und der jeweilige Querstrom (IQ) auf ein Sekundärteil (11, 11') des Linearantriebs bezogen sind,
- wobei die jeweilige Steuereinrichtung (4) einen jeweiligen Querstromsollwert (IQ*) und den jeweiligen Querstrom (IQ) einem jeweiligen Querstromregler (13) zuführt, der daraus einen jeweiligen Querspannungssollwert (UQ*) ermittelt,
- wobei die jeweilige Steuereinrichtung (4) einen jeweiligen Längsstromsollwert (ID*) und den jeweiligen Längsstrom (ID) einem jeweiligen Längsstromregler (15) zuführt, der daraus einen jeweiligen Längsspannungssollwert (UD*) ermittelt,
- wobei die jeweilige Steuereinrichtung (4) anhand des jeweiligen Längsspannungssollwerts (UD*), des jeweiligen Querspannungssollwerts (UQ*) und des jeweiligen Kommutierungswinkels (ε) für vom jeweiligen Umrichter (3) an das jeweilige Segment (2) auszugebende Spannungen (UR*, US*, UT*) eines Drehspannungssystems charakteristische Daten ermittelt und dem jeweiligen Umrichter (3) vorgibt,
**dadurch gekennzeichnet,**
- **dass** die jeweilige Steuereinrichtung (4) den jeweiligen Kommutierungswinkel (ε) als Summe des jeweiligen Basiskommutierungswinkels (ε1) und eines jeweiligen Dämpfungskommutierungswinkels (ε2) zuzüglich eines jeweiligen ersten Korrekturwerts (ε3) und/oder eines jeweiligen zweiten Korrekturwerts (ε4) ermittelt,
- **dass** die jeweilige Steuereinrichtung (4) den jeweiligen Dämpfungskommutierungswinkel (ε2) mittels eines jeweiligen Schwingungsdämpfungsblocks (20) ermittelt, dem zumindest der jeweilige Längsspannungssollwert (UD*) und/oder der jeweilige Querspannungssollwert (UQ*) zugeführt werden,
- **dass** die jeweilige Steuereinrichtung (4) den jeweiligen ersten Korrekturwert (ε3) von der das jeweils vorgeordnete Segment (2) steuernden Steuereinrichtung (4) und/oder den jeweiligen zweiten Korrekturwert (ε4) von der das jeweils nachgeordnete Segment (2) steuernden Steuereinrichtung (4) entgegennimmt,
- **dass** die jeweilige Steuereinrichtung (4) mittels des jeweiligen Schwingungsdämpfungsblocks (20) eine erste und/ oder eine zweite Korrekturgröße (ε5, ε6) ermittelt und
- **dass** die jeweilige Steuereinrichtung (4) die jeweilige erste Korrekturgröße (ε5) an die das jeweils vorgeordnete Segment (2) steuernde Steuereinrichtung (4) und/oder die jeweilige zweite Korrekturgröße (ε6) an die das jeweils nachgeordnete Segment (2) steuernde Steuereinrichtung (4) übermittelt.

2. Steuerverfahren nach Anspruch 1,
**dadurch gekennzeichnet,**
**dass** dem jeweiligen Schwingungsdämpfungsblock (20) zusätzlich der jeweilige Geschwindigkeitssollwert (v*) zugeführt wird und dass der jeweilige Schwingungsdämpfungsblock (20) den jeweiligen Geschwindigkeitssollwert (v*) bei der Ermittlung des jeweiligen Dämpfungskommutierungswinkels (ε2) sowie der jeweiligen ersten und/oder der jeweiligen zweiten Korrekturgröße (ε5, ε6) berücksichtigt.

3. Steuerverfahren nach Anspruch 1 oder 2,
**dadurch gekennzeichnet,**
- **dass** die jeweilige Steuereinrichtung (4) die jeweiligen Ströme (IR, IS, IT) in einem Stromreglertakt entgegennimmt und die für die vom jeweiligen Umrichter (3) an das jeweilige Segment (2) auszugebenden Spannungen (UR*, US*, UT*) charakteristischen Daten dem jeweiligen Umrichter (3) im Stromreglertakt vorgibt,
- **dass** die jeweilige Steuereinrichtung die Korrekturwerte (ε3, ε4) in einem Kommunikationstakt entgegennimmt und die Korrekturgrößen (ε5, ε6) im Kommunikationstakt übermittelt und
- **dass** der Kommunikationstakt gleich dem Stromreglertakt ist oder ein ganzzahliges Vielfaches des Stromreglertakts ist.

4. Steuerverfahren nach Anspruch 1,
**dadurch gekennzeichnet,**
**dass** die jeweilige Steuereinrichtung (4) - anstelle der Vorgabe des jeweiligen Geschwindigkeitssollwerts (v*) nebst Fortschreibung des Basiskommutierungswinkels (ε1) - den Basiskommutierungswinkel (ε1) von der das jeweils vorgeordnete Segment (2) steuernden Steuereinrichtung (4) oder von der das jeweils nachgeordnete Segment (2) steuernden Steuereinrichtung (4) entgegennimmt.

5. Steuerverfahren nach Anspruch 4,
**dadurch gekennzeichnet,**
**dass** die jeweilige Steuereinrichtung (4) aus dem entgegengenommenen Basiskommutierungswinkel (ε1) den jeweiligen Geschwindigkeitssollwert (v*) ableitet, dass dem jeweiligen Schwingungsdämpfungsblock (20) zusätzlich der jeweilige abgeleitete Geschwindigkeitssollwert (v*) zugeführt wird und dass der jeweilige Schwingungsdämpfungsblock (20) den jeweiligen Geschwindigkeitssollwert (v*) bei der Ermittlung des jeweiligen Dämpfungskommutierungswinkels (ε2) sowie der jeweiligen ersten und/oder der jeweiligen zweiten Korrekturgröße (ε5, ε6) berücksichtigt.

6. Steuerverfahren nach Anspruch 4 oder 5,
**dadurch gekennzeichnet,**
- **dass** die jeweilige Steuereinrichtung (4) die jeweiligen Ströme (IR, IS, IT) in einem Stromreglertakt entgegennimmt und die für die vom jeweiligen Umrichter (3) an das jeweilige Segment (2) auszugebenden Spannungen (UR*, US*, UT*) charakteristischen Daten dem jeweiligen Umrichter (3) im Stromreglertakt vorgibt,
- **dass** die jeweilige Steuereinrichtung den Basiskommutierungswinkel (ε1) und die Korrekturwerte (ε3, ε4) in einem Kommunikationstakt entgegennimmt und die Korrekturgrößen (ε5, ε6) im Kommunikationstakt übermittelt und
- **dass** der Kommunikationstakt gleich dem Stromreglertakt ist oder ein ganzzahliges Vielfaches des Stromreglertakts ist.

7. Steuerverfahren nach einem der obigen Ansprüche,
**dadurch gekennzeichnet,**
**dass** dem jeweiligen Schwingungsdämpfungsblock (20) zusätzlich der jeweilige Querstromsollwert (IQ*) zugeführt wird und dass der jeweilige Schwingungsdämpfungsblock (20) den jeweiligen Querstromsollwert (IQ*) bei der Ermittlung des jeweiligen Dämpfungskommutierungswinkels (ε2) sowie der jeweiligen ersten und/oder der jeweiligen zweiten Korrekturgröße (ε5, ε6) berücksichtigt.

8. Steuerverfahren nach einem der Ansprüche 1 bis 7,
**dadurch gekennzeichnet,**
**dass** die jeweilige Steuereinrichtung (4) einen ersten Anteil (A1) ermittelt, zu welchem ein sich teilweise im jeweiligen Segment (2) befindliches Sekundärteil (11) des Linearantriebs sich im jeweils vorgeordneten Segment (2) befindet, und den jeweiligen ersten Korrekturwert (ε3) vor dem Summieren mit dem ersten Anteil (A1) wichtet und/oder dass die jeweilige Steuereinrichtung (4) einen zweiten Anteil (A2) ermittelt, zu welchem ein sich teilweise im jeweiligen Segment (2) befindliches Sekundärteil (11') des Linearantriebs sich im jeweils nachgeordneten Segment (2) befindet, und die jeweilige zweite Korrekturgröße (ε4) vor dem Summieren mit dem zweiten Anteil (A2) wichtet.

9. Steuerverfahren nach einem der Ansprüche 1 bis 7,
**dadurch gekennzeichnet,**
**dass** die jeweilige Steuereinrichtung (4) einen ersten Anteil (B1) ermittelt, zu welchem ein sich teilweise im vorgeordneten Segment (2) befindliches Sekundärteil (11) des Linearantriebs sich im jeweiligen Segment (2) befindet, und den ersten Anteil (B1) bei der Ermittlung der jeweiligen ersten Korrekturgröße (ε5) berücksichtigt und/oder dass die jeweilige Steuereinrichtung (4) einen zweiten Anteil (B2) ermittelt, zu welchem ein sich teilweise im nachgeordneten Segment (2) befindliches Sekundärteil (11') des Linearantriebs sich im jeweiligen Segment (2) befindet, und den zweiten Anteil (B2) bei der Ermittlung der jeweiligen zweiten Korrekturgröße (ε6) berücksichtigt.

10. Steuerverfahren nach einem der obigen Ansprüche,
**dadurch gekennzeichnet,**
**dass** der jeweiligen Steuereinrichtung (4) zusätzlich ein jeweiliger Beschleunigungssollwert (a*) vorgegeben wird und dass die jeweilige Steuereinrichtung (4) den jeweiligen Querstromsollwert (IQ*) anhand des jeweiligen Beschleunigungssollwerts (a*) ermittelt.

11. Steuerverfahren nach einem der obigen Ansprüche,
**dadurch gekennzeichnet,**
**dass** es zum Transportieren und Positionieren von Werkstückträgern oder Förderelementen verwendet wird.

12. Computerprogramm, das Maschinencode (7) umfasst, der von einer Steuereinrichtung (4) für einen Umrichter (3) abarbeitbar ist, wobei die Abarbeitung des Maschinencodes (7) durch die Steuereinrichtung (4) bewirkt, dass die Steuereinrichtung (4) den Umrichter (3) gemäß einem Steuerverfahren nach einem der obigen Ansprüche steuert.

13. Steuereinrichtung für einen Umrichter (3),
**dadurch gekennzeichnet,**
**dass** die Steuereinrichtung mit einem Computerprogramm (5) nach Anspruch 12 programmiert ist.

14. Linearantrieb,
- wobei ein Primärteil (1) des Linearantriebs eine Mehrzahl von sequenziell aufeinanderfolgenden Segmenten (2) aufweist,
- wobei die Segmente (2) jeweils mittels eines jeweiligen Umrichters (3) an eine Versorgungsspannung (U) angeschaltet werden, so dass die Segmente (2) mit jeweiligen Strömen (IR, IS, IT) eines Drehstromsystems beaufschlagt werden,
- wobei die Umrichter (3) von einer jeweiligen Steuereinrichtung (4) gesteuert werden,
**dadurch gekennzeichnet,**
**dass** die Steuereinrichtungen (4) jeweils gemäß Anspruch 13 ausgebildet sind.

## Claims

1. Control method for a primary part (1) of a linear drive,
- wherein the primary part (1) has a plurality of sequentially consecutive segments (2),
- wherein the segments (2) are connected to a supply voltage (U) by means of a respective converter (3) in each case, such that the segments (2) receive respective currents (IR, IS, IT) of a three-phase system,
- wherein a respective desired speed value (v*) is specified to a respective control device (4) which controls the respective converter (3),
- wherein the respective control device (4) updates a respective basic commutation angle (ε1) on the basis of the respective desired speed value (v*),
- wherein the respective currents (IR, IS, IT) are captured and supplied to the respective control device (4),
- wherein the respective control device (4) determines a respective direct-axis component of current (ID) and a respective quadrature-axis component of current (IQ) on the basis of the respective currents (IR, IS, IT) and a respective commutation angle (ε),
- wherein the respective direct-axis component of current (ID) and the respective quadrature-axis component of current (IQ) relate to a secondary part (11, 11') of the linear drive,
- wherein the respective control device (4) supplies a respective desired value for the quadrature-axis component of current (IQ*) and the respective quadrature-axis component of current (IQ) to a respective regulator for the quadrature-axis component of current (13), which determines a respective desired value for the quadrature-axis component of voltage (UQ*) therefrom,
- wherein the respective control device (4) supplies a respective desired value for the direct-axis component of current (ID*) and the respective direct-axis component of current (ID) to a respective regulator for the direct-axis component of current (15), which determines a respective desired value for the direct-axis component of voltage (UD*) therefrom,
- wherein the respective control device (4), on the basis of the respective desired value for the direct-axis component of voltage (UD*), the respective desired value for the quadrature-axis component of voltage (UQ*) and the respective commutation angle (ε), determines characteristic data in respect of voltages (UR*, US*, UT*) of a three-phase voltage system that are to be output by the respective converter (3) to the respective segment (2), and specifies these to the respective converter (3), **characterised in that**
- the respective control device (4) determines the respective commutation angle (ε) as a sum of the respective basic commutation angle (ε1) and a respective damping commutation angle (ε2) plus a respective first correction value (ε3) and/or a respective second correction value (ε4),
- the respective control device (4) determines the respective damping commutation angle (ε2) by means of a respective vibration damping block (20) to which at least the respective desired value for the direct-axis component of voltage (UD*) and/or the respective desired value for the quadrature-axis component of voltage (UQ*) are supplied,
- the respective control device (4) receives the respective first correction value (ε3) from the control device (4) which controls the currently preceding segment (2) and/or the respective second correction value (ε4) from the control device (4) which controls the currently succeeding segment (2),
- the respective control device (4) determines a first and/or a second correction variable (ε5, ε6) by means of the respective vibration damping block (20), and
- the respective control device (4) transmits the respective first correction variable (ε5) to the control device (4) which controls the currently preceding segment (2) and/or the respective second correction variable (ε6) to the control device (4) which controls the currently succeeding segment (2).

2. Control method according to claim 1,
**characterised in that**
the respective desired speed value (v*) is also supplied to the respective vibration damping block (20), and that the respective vibration damping block (20) takes the respective desired speed value (v*) into consideration when determining the respective damping commutation angle (ε2) and the respective first and/or the respective second correction variable (ε5, ε6).

3. Control method according to claim 1 or 2,
**characterised in that**
- the respective control device (4) receives the respective currents (IR, IS, IT) in a current-regulator clock cycle and specifies the characteristic data, in respect of the voltages (UR*, US*, UT*) that are to be output by the respective converter (3) to the respective segment (2), to the respective converter (3) in the current-regulator clock cycle, that
- the respective control device receives the correction values (ε3, ε4) in a communication clock cycle and transmits the correction variables (ε5, ε6) in the communication clock cycle, and that
- the communication clock cycle is identical to the current-regulator clock cycle or is a whole-number multiple of the current-regulator clock cycle.

4. Control method according to claim 1,
**characterised in that**
instead of the specification of the respective desired speed value (v*) and updating of the basic commutation angle (ε1), the respective control device (4) receives the basic commutation angle (ε1) from the control device (4) which controls the currently preceding segment (2) or from the control device (4) which controls the currently succeeding segment (2).

5. Control method according to claim 4,
**characterised in that**
the respective control device (4) derives the respective desired speed value (v*) from the received basic commutation angle (ε1), that the respective derived desired speed value (v*) is additionally supplied to the respective vibration damping block (20), and that the respective vibration damping block (20) takes the respective desired speed value (v*) into consideration when determining the respective damping commutation angle (ε2) and the respective first and/or the respective second correction variable (ε5, ε6).

6. Control method according to claim 4 or 5,
**characterised in that**
- the respective control device (4) receives the respective currents (IR, IS, IT) in a current-regulator clock cycle and specifies the characteristic data, in respect of the voltages (UR*, US*, UT*) to be output by the respective converter (3) to the respective segment (2), to the respective converter (3) in the current-regulator clock cycle, that
- the respective control device receives the basic commutation angle (ε1) and the correction values (ε3, ε4) in a communication clock cycle and transmits the correction variables (ε5, ε6) in the communication clock cycle, and that
- the communication clock cycle is identical to the current-regulator clock cycle or is a whole-number multiple of the current-regulator clock cycle.

7. Control method according to one of the preceding claims,
**characterised in that**
the respective desired value for the quadrature-axis component of current (IQ*) is also supplied to the respective vibration damping block (20), and that the respective vibration damping block (20) takes the respective desired value for the quadrature-axis component of current (IQ*) into consideration when determining the respective damping commutation angle (ε2) and the respective first and/or the respective second correction variable (ε5, ε6).

8. Control method according to one of claims 1 to 7,
**characterised in that**
the respective control device (4) determines a first degree (A1), to which a secondary part (11) of the linear drive, said secondary part (11) being situated partially in the respective segment (2), is situated in the currently preceding segment (2), and weights the respective first correction value (ε3) by the first degree (A1) before summing, and/or that the respective control device (4) determines a second degree (A2), to which a secondary part (11') of the linear drive, said secondary part (11') being situated partially in the respective segment (2), is situated in the currently succeeding segment (2), and weights the respective second correction variable (ε4) by the second degree (A2) before summing.

9. Control method according to one of claims 1 to 7,
**characterised in that**
the respective control device (4) determines a first degree (B1), to which a secondary part (11) of the linear drive, said secondary part (11) being situated partially in the preceding segment (2), is situated in the respective segment (2), and takes said first degree (B1) into consideration when determining the respective first correction variable (ε5), and/or that the respective control device (4) determines a second degree (B2), to which a secondary part (11') of the linear drive, said secondary part (11') being situated partially in the succeeding segment (2), is situated in the respective segment (2), and takes said second degree (B2) into consideration when determining the respective second correction variable (ε6).

10. Control method according to one of the preceding claims,
**characterised in that**
a respective desired acceleration value (a*) is also specified to the respective control device (4), and that the respective control device (4) determines the respective desired value for the quadrature-axis component of current (IQ*) on the basis of the respective desired acceleration value (a*).

11. Control method according to one of the preceding claims,
**characterised in that**
it is used for transporting and positioning work carriers or conveyor elements.

12. Computer program comprising machine code (7) which can be executed by a control device (4) for a converter (3), wherein the execution of the machine code (7) by the control device (4) causes the control device (4) to control the converter (3) in accordance with a control method according to one of the preceding claims.

13. Control device for a converter (3),
**characterised in that**
the control device is programmed by a computer program (5) according to claim 12.

14. Linear drive,
- wherein a primary part (1) of the linear drive has a plurality of sequentially consecutive segments (2),
- wherein the segments (2) are connected to a supply voltage (U) by means of a respective converter (3) in each case, such that the segments (2) receive respective currents (IR, IS, IT) of a three-phase system, and
- wherein the converters (3) are controlled by a respective control device (4),
**characterised in that**
the control devices (4) are designed in accordance with claim 13 in each case.

## Revendications

1. Procédé de commande d'une partie primaire (1) d'un entraînement linéaire, la partie primaire (1) comportant une pluralité de segments (2) qui se succèdent séquentiellement,
- les segments (2) étant respectivement connectés à une tension d'alimentation (U) au moyen d'un convertisseur (3) respectif, de sorte que les segments (2) sont soumis à des courants respectifs (IR, IS, IT) d'un système de courant triphasé ;
- une valeur de vitesse de consigne respective (v*) étant imposée à un dispositif de commande (4) pilotant le convertisseur respectif (3) ;
- le dispositif de commande respectif (4) poursuivant un angle de commutation de base respectif (ε1) à l'aide de la valeur de vitesse de consigne respective (v*) ;
- les courants respectifs (IR, IS, IT) étant détectés et amenés au dispositif de commande respectif (4) ;
- le dispositif de commande respectif (4) déterminant, à l'aide des courants respectifs (IR, IS, IT) et d'un angle de commutation respectif (ε), un courant longitudinal respectif (ID) et un courant transversal respectif (IQ) ;
- le courant longitudinal respectif (ID) et le courant transversal respectif (IQ) étant rapportés à une partie secondaire (11, 11') de l'entraînement linéaire ;
- le dispositif de commande respectif (4) amenant une valeur de courant transversal de consigne respective (IQ*) et le courant transversal respectif (IQ) à un régulateur de courant transversal respectif (13) qui détermine sur cette base une valeur de tension transversale de consigne respective (UQ*) ;
- le dispositif de commande respectif (4) amenant une valeur de courant longitudinal de consigne respective (ID*) et le courant longitudinal respectif (ID) à un régulateur de courant longitudinal respectif (15) qui détermine sur cette base une valeur de tension longitudinale de consigne respective (UD*) ;
- le dispositif de commande respectif (4) déterminant des données caractéristiques à l'aide de la valeur de tension longitudinale de consigne respective (UD*), de la valeur de tension transversale de consigne respective (UQ*) et de l'angle de commutation respectif (ε) pour des tensions (UR*, US*, UT*) d'un système de tension triphasée que le convertisseur respectif (3) doit délivrer au segment respectif (2) et les imposant au convertisseur respectif (3),
**caractérisé en ce que**
le dispositif de commande respectif (4) détermine l'angle de commutation respectif (ε) comme étant la somme de l'angle de commutation de base respectif (ε1) et d'un angle de commutation d'amortissement respectif (ε2) plus une première valeur de correction respective (ε3) et/ou une deuxième valeur de correction respective (ε4),
le dispositif de commande respectif (4) détermine l'angle de commutation d'amortissement respectif (ε2) au moyen d'un bloc d'amortissement des vibrations respectif (20) auquel sont amenées au moins la valeur de tension longitudinale de consigne respective (UD*) et/ou la valeur de tension transversale de consigne respective (UQ*),
le dispositif de commande respectif (4) accepte la première valeur de correction respective (ε3) du dispositif de commande (4) pilotant le segment (2) situé respectivement en amont et/ou la deuxième valeur de correction respective (ε4) du dispositif de commande (4) pilotant le segment (2) situé respectivement en aval, le dispositif de commande respectif (4) détermine, au moyen du bloc d'amortissement des vibrations respectif (20), une première et/ou une deuxième grandeur de correction (ε5, ε6) et
le dispositif de commande respectif (4) transmet la première grandeur de correction respective (ε5) au dispositif de commande (4) pilotant le segment (2) situé respectivement en amont et/ou la deuxième grandeur de correction respective (ε6) au dispositif de commande (4) pilotant le segment (2) situé respectivement en aval.

2. Procédé de commande selon la revendication 1,
**caractérisé en ce que**
la valeur de vitesse de consigne respective (v*) est en outre amenée au bloc d'amortissement des vibrations respectif (20) et le bloc d'amortissement des vibrations respectif (20) tient compte de la valeur de vitesse de consigne respective (v*) lors de la détermination de l'angle de commutation d'amortissement respectif (ε2) ainsi que de la première et/ou de la deuxième grandeur de correction respective (ε5, ε6).

3. Procédé de commande selon la revendication 1 ou 2,
**caractérisé en ce que**
- le dispositif de commande respectif (4) accepte les courants respectifs (IR, IS, IT) dans un cycle de régulateur de courant et impose au convertisseur respectif (3), dans le cycle de régulateur de courant, les données caractéristiques pour les tensions (UR*, US*, UT*) que le convertisseur respectif (3) doit délivrer au segment respectif (2),
- le dispositif de commande respectif accepte les valeurs de correction (ε3, ε4) dans un cycle de communication et transmet les grandeurs de correction (ε5, ε6) dans le cycle de communication
et
- le cycle de communication est égal au cycle de régulateur de courant ou est un multiple entier du cycle de régulateur de courant.

4. Procédé de commande selon la revendication 1,
**caractérisé en ce que**
le dispositif de commande respectif (4), au lieu d'imposer la valeur de vitesse de consigne respective (v*) y compris la poursuite de l'angle de commutation de base (ε1), accepte l'angle de commutation de base (ε1) du dispositif de commande (4) pilotant le segment (2) situé respectivement en amont ou du dispositif de commande (4) pilotant le segment (2) situé respectivement en aval.

5. Procédé de commande selon la revendication 4,
**caractérisé en ce que**
le dispositif de commande respectif (4) déduit la valeur de vitesse de consigne respective (v*) de l'angle de commutation de base accepté (ε1), **en ce que** la valeur de vitesse de consigne déduite respective (v*) est en outre amenée au bloc d'amortissement des vibrations respectif (20) et **en ce que** le bloc d'amortissement des vibrations respectif (20) tient compte de la valeur de vitesse de consigne respective (v*) lors de la détermination de l'angle de commutation d'amortissement respectif (ε2) ainsi que de la première et/ou de la deuxième grandeur de correction respective (ε5, ε6).

6. Procédé de commande selon la revendication 4 ou 5, **caractérisé en ce que**
- le dispositif de commande respectif (4) accepte les courants respectifs (IR, IS, IT) dans un cycle de régulateur de courant et impose au convertisseur respectif (3), dans le cycle de régulateur de courant, les données caractéristiques pour les tensions (UR*, US*, UT*) que le convertisseur respectif (3) doit délivrer au segment respectif (2),
- le dispositif de commande respectif accepte l'angle de commutation de base (ε1) et les valeurs de correction (ε3, ε4) dans un cycle de communication et transmet les grandeurs de correction (ε5, ε6) dans le cycle de communication et
- le cycle de communication est égal au cycle de régulateur de courant ou est un multiple entier du cycle de régulateur de courant.

7. Procédé de commande selon l'une des revendications précédentes,
**caractérisé en ce que**
la valeur de courant transversal de consigne respective (IQ*) est en outre amenée au bloc d'amortissement des vibrations respectif (20) et le bloc d'amortissement des vibrations respectif (20) tient compte de la valeur de courant transversal de consigne respective (IQ*) lors de la détermination de l'angle de commutation d'amortissement respectif (ε2) ainsi que de la première et/ou de la deuxième grandeur de correction respective (ε5, ε6).

8. Procédé de commande selon l'une des revendications 1 à 7,
**caractérisé en ce que**
le dispositif de commande respectif (4) détermine une première partie (A1) à concurrence de laquelle une partie secondaire (11) de l'entraînement linéaire située en partie dans le segment respectif (2) se trouve dans le segment respectivement en amont (2) et pondère la première valeur de correction respective (ε3) avant l'addition avec la première partie (A1) et/ou **en ce que** le dispositif de commande respectif (4) détermine une deuxième partie (A2) à concurrence de laquelle une partie secondaire (11') de l'entraînement linéaire située en partie dans le segment respectif (2) se trouve dans le segment (2) respectivement en aval et la deuxième grandeur de correction respective (ε4) pondère avant l'addition avec la deuxième partie (A2).

9. Procédé de commande selon l'une des revendications 1 à 7,
**caractérisé en ce que**
le dispositif de commande respectif (4) détermine une première partie (B1) à concurrence de laquelle une partie secondaire (11) de l'entraînement linéaire située en partie dans le segment en amont (2) se trouve dans le segment respectif (2) et tient compte de la première partie (B1) lors de la détermination de la première grandeur de correction respective (ε5) et/ou **en ce que** le dispositif de commande respectif (4) détermine une deuxième partie (B2) à concurrence de laquelle une partie secondaire (11') de l'entraînement linéaire située en partie dans le segment en aval (2) se trouve dans le segment respectif (2) et tient compte de la deuxième partie (B2) lors de la détermination de la deuxième grandeur de correction respective (ε6).

10. Procédé de commande selon l'une des revendications précédentes,
**caractérisé en ce que**
une valeur de consigne d'accélération respective (a*) est en outre imposée au dispositif de commande respectif (4) et **en ce que** le dispositif de commande respectif (4) détermine la valeur de courant transversal de consigne respective (IQ*) à l'aide de la valeur de consigne d'accélération respective (a*).

11. Procédé de commande selon l'une des revendications précédentes,
**caractérisé en ce que**
il est utilisé pour transporter et positionner des supports de pièces à usiner ou des éléments de convoyage.

12. Programme informatique comprenant un code machine (7) qui peut être traité par un dispositif de commande (4) pour un convertisseur (3), le traitement du code machine (7) par le dispositif de commande (4) a pour effet que le dispositif de commande (4) commande le convertisseur (3) selon un procédé de commande selon l'une des revendications précédentes.

13. Dispositif de commande pour un convertisseur (3),
**caractérisé en ce que**
le dispositif de commande est programmé avec un programme informatique (5) selon la revendication 12.

14. Entraînement linéaire,
- une partie primaire (1) de l'entraînement linéaire présentant une pluralité de segments (2) qui se succèdent séquentiellement,
- les segments (2) étant connectés à une tension d'alimentation (U) respectivement au moyen d'un convertisseur respectif (3), de sorte que les segments (2) sont soumis à des courants respectifs (IR, IS, IT) d'un système de courant triphasé,
- les convertisseurs (3) étant commandés par un dispositif de commande respectif (4),
**caractérisé en ce que**
les dispositifs de commande (4) sont réalisés respectivement selon la revendication 13.
